# EUROPEAN PATENT APPLICATION

(11) **EP 0 884 710 A1**
(43) Date of publication of application: **16.12.1998**
(21) Application number: 97925757.3
(22) Date of filing: 25.02.1997
(51) Int. Cl.: G09B 15/00, G09B 15/02

(54) **PUSHED KEY INDICATING DEVICE FOR KEYBOARD INSTRUMENT AND METHOD OF USING SAME**

(30) Priority: 26.02.1996 JP 80422/96; 08.05.1996 JP 151487/96; 17.09.1996 JP 245286/96
(71) Applicant: Abe, Toru, Kobe-shi, Hyogo-ken 651-11 (JP)
(72) Inventor: Abe, Toru, Kobe-shi, Hyogo-ken 651-11 (JP)
(74) Representative: Müller-Boré & Partner Patentanwälte
(86) International application number: JP9700531
(87) International publication number: WO9731353

(57) **Abstract**

On the assumption of being used for existing keyboard instruments, a pushed key indicating device can give a player information required for fingering by means of a simple means in an easily understandable manner, has an indicating section easy to see, and is easy to mount on and dismount from a keyboard instrument. The pushed key indicating device comprises a plurality of pushed key indicating portions (2a, 2b) having illuminants (7, 8) and indication plates (3), arranged so that these indication portions respectively correspond to the indicating portions keys (4, 5) of the keyboard instrument, and control means for making the illuminants luminous to inform a player of a key to be pushed and indicate a finger or fingers to be used.

## Description

### TECHNICAL FIELD

The present invention relates to a push key instructing device for keyboard instrument which is mounted on keys of a conventional keyboard instrument such as a piano, and informs a player of a key to be pushed, and a finger and a hand to be used by means of push key indicators arranged to correspond to the keys, thereby allowing the player to easily learn to play the keyboard instrument; and a method for using the same.

### BACKGROUND ART

In general, when a person is learning to play keyboard instrument, he or she must first read through musical scales, and then repeatedly practice the fingering. Usually, a player has to practice for a long time until he or she can almost completely play a music. In order to facilitate the learning process of playing a music with keyboard instrument, various assistant devices have been proposed. For example, Japanese Unexamined Patent Publication No. 48-47819 discloses a technique in which illuminants are incorporated into keys of keyboard instrument. The illuminants are illuminated so that a player visually recognizes which key to push. Japanese Unexamined Patent Publication No. 6-214562 discloses a technique in which an assistant device is mounted to keyboard instrument so that a group of five light emitting diodes in red color and five light emitting diodes in white color is assigned to each key of keyboard instrument along an imaginary line extended from the base end of the key.

Most of the conventional assistant devices are of the type that is integrated into an electronic instrument, and therefore, they are not applicable to ordinary pianos.

However, there is a widespread desire to utilize a piano which many families have but has been left unused. In the practice of playing piano, the player can have finger exercise while enjoying a music. Finger exercise, from other viewpoint, is effective in preventing old people from dementia. Under such a condition, there is a demand for developing a system which is applicable to a conventional piano and makes it easy for even old people to learn to play a music.

From the viewpoint described above, there have been proposed some devices for indicating a key to be pushed which are applicable to a conventional keyboard instrument. For example, Japanese Unexamined Patent Publication No. 58-118698 discloses a technique in which an indication device with multicolor display is mounted on a conventional keyboard instrument. However, there still has not been developed a push key indicating device which provides a player with information necessary for fingering, such as the key to be pushed, a hand and finger to be used, and the time length to hold the key depressed.

The present invention has been made to solve the above-described problem of the prior art. Therefore, an objective of the present invention is to provide a push key indicating device intended for use in a conventional keyboard instrument which provides a player with information necessary for fingering by a simple means in an easily understandable manner. The push key indicating device has a push key indicator easy to see, and can be easily mounted on and dismounted from the keyboard instrument.

### DISCLOSURE OF THE INVENTION

One feature of the present invention is that the push key indicating device for keyboard instrument includes: a plurality of push key indicators having an illuminant for indicating a key to be pushed; an indication plate on which the plurality of push key indicators are arranged to correspond to keys of keyboard instrument; and a controller for illuminating the illuminants to inform a player of a key to be pushed, a finger to be use, and a hand to be used.

In the present invention, the push key indicator may preferably include at least one illuminant which displays a number, a letter, or a code to indicate which finger to use. The illuminant may change its display color to indicate which hand to use. It is recommended that the illuminant includes either one of a light-emitting diode, a liquid crystal display, or a plasma display. The push key indicator may include the illuminant which displays a number corresponding to the finger to be used, and at least one other illuminant which indicates the hand to be used. This structure is simple, but is capable of providing a player with information necessary for fingering in an easily understandable manner.

The controller is preferably a computer. The controller may include a tempo controller for causing the illuminant to vary its tempo of illumination display upon receiving a signal from the input device. This structure makes it possible to change the tempo of illumination display of illuminant in accordance with the progress in playing the music.

Furthermore, the push key indicating device may further includes a key sound generator for generating the sound of the key to be pushed, and the controller is so designed as to output an action command signal to the key sound generator. With this structure, the sound generator can produce the melody of the music to be played. Therefore, even though the player does not know the music or cannot read music scores, he or she can hear and know the melody of the music beforehand by the key sound generator, thereby accelerating the learning speed of playing the music. In this case as well, it is recommended that the key sound generator includes a tempo controller which causes the key sound generator to change its tempo of sound generation upon receiving a signal from the input device.

It is also a preferable embodiment that the push key indicating device further includes a rhythm instructor which, at the same time of indicating the keys to be pushed, instructs a player of the rhythm of the music to be played by turning on and off the illuminant or by generating a key sound. Or alternatively, the rhythm instructor may instruct a player of the rhythm of the music to be played prior to indicating the key to be pushed. The push key indicating device may further include a transposition controller which automatically indicates a key to be pushed in accordance with a transposition of an original tone to another tone upon receiving a signal from the input device. This structure is advantageous when the player sings a song and plays a keyboard instrument as an accompaniment to the song in a key meeting his or her voice tone. The push key indicator corresponding to a black key may be disposed at a position higher than the push key indicator corresponding to a white key. Furthermore, the push key indicator corresponding to a black key may have a frame painted in a different color from the push key indicator corresponding to a white key. These arrangements are preferable in that the player can easily distinguish the indication for a black key from that for a white key.

The indication plate may have a cutout portion on its bottom side to fit around a black key at its base end in the depth direction (far away from a player). This structure facilitates the positioning of the device with respect to the keys.

According to the present invention, the push key indicating device is preferably mounted to a conventional keyboard instrument on the base ends of the keys in the depth direction. At this position, the indications displayed on the indication plate are easy to see for the player. For example, the push key indicating device is mounted at a space between the base end of the keys and a music stand.

The push key indicating device including the indication plate with a cutout portion on its bottom side may be mounted to the keys of keyboard instrument in such a way that the indication plate is fit around a base portion of a black key. As a keyboard instrument has a unique arrangement of white keys and black keys, the player can mount the push key instructing device at a correct position without mounting it to a wrong position.

### BRIEF DESCRIPTION OF THE DRAWINGS

Figure 1 is a front view showing a push key indicating device according to the present invention.

Figure 2 is an explanatory diagram showing one embodiment of a push key indicator according to the present invention.

Figure 3 is a block diagram showing the embodiment according to the present invention.

Figure 4 is a perspective diagram showing the state where the push key indicating device of the present invention is used.

Figure 5 is an explanatory diagram showing another embodiment of the push key indicator according to the present invention.

Figure 6 is an explanatory diagram showing still another embodiment of the push key indicator according to the present invention.

### BEST MODE FOR CARRYING OUT THE INVENTION

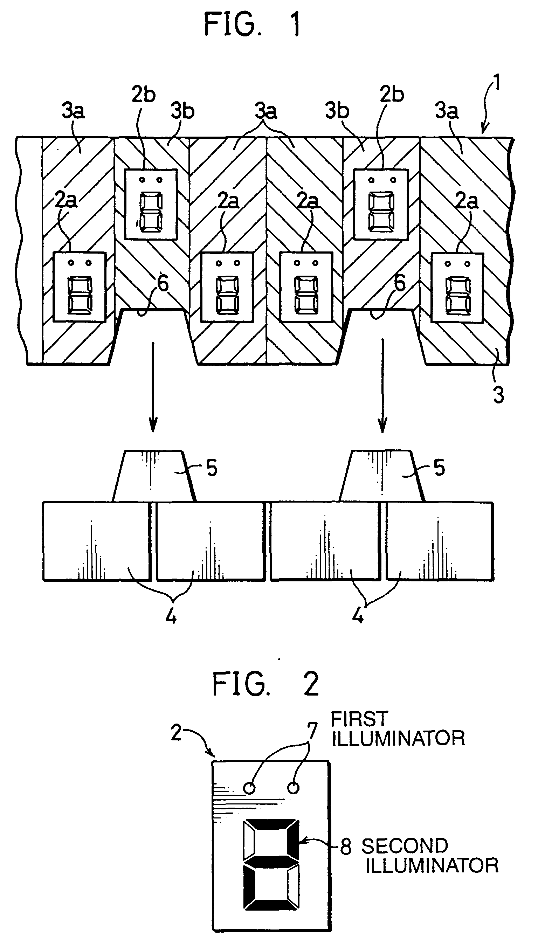

Hereinafter, the present invention will be described in detail by way of examples referring to the accompanied drawings. Figure 1 is a front view showing the way of mounting a push key indicating device 1 of the present invention on a keyboard instrument such as piano. The push key indicating device 1 includes push key indicators 2a, 2a corresponding to white keys 4 shown by a cross-sectional view, push key indicators 2b, 2b corresponding to black keys 5 shown by a cross-sectional view, and an indication plate 3 (3a, 3b) on which the push key indicators are arranged. The indication plate 3 (3b) has a cutout portion 6 on its bottom side so as to be fit to around a black key. With this structure, the push key indicating device can be mounted to the keyboard instrument at the base ends of the keys, whereby the device and the keys are close to each other. As a result, there is an advantage that the player can simultaneously see the keys and the instruction displayed on the push key indicators, and therefore, can easily recognize the indications displayed on the push key indicators. In addition, the player can mount the device on a keyboard instrument at a correct position without mounting it at a wrong position, because a keyboard instrument has a unique arrangement of white keys and black keys.

The push key indicator 2b corresponding to a black key is preferably at a position higher than the push key indicator 2a corresponding to a white key. This structure makes it easy for the player to visually recognize whether the display on the push key indicator is intended for black key or white key, because, in a keyboard instrument, the black keys always project upward from the surfaces of the white keys. The same effect can be obtained by coloring the periphery 3a for a white key with a color different from the periphery 3b for a black key. It is preferable for good visual recognition that the periphery 3a for a white key is colored with white, and the periphery 3b for a black key is colored with black.

In Figure 1, the push key indicating device has a structure in which the push key indicator 2b corresponding to a black key is at a position higher than the push key indicator 2a corresponding to a white key, and a structure in which the periphery 3a for a white key is colored with a color different from the periphery 3b for a black key. However, the push key indicating device may have either one of the structures. In addition, the push key indicator corresponding to a black key may have a color different from that corresponding to a white color at the areas other than the illuminants. Furthermore, in place of arranging the push key indicator corresponding to a black key at a position higher than that corresponding to a white key, all the push key indicators may be arranged at the same height each other. In this case, the player is given only the information from the illuminants in the push key indicators.

According to the present invention, the push key indicating device does not necessarily have the push key indicators corresponding to all the keys of the keyboard instrument. The device preferably has the push key indicators corresponding to keys of about three to six octaves. The device with this length is easy to see for the player, and is compact in size. Instead of the structure shown in Figure 1, the device may be so designed as to be mounted at a space between the base ends of the keys and the music table without forming a cutout portion on the bottom side of the indication plate.

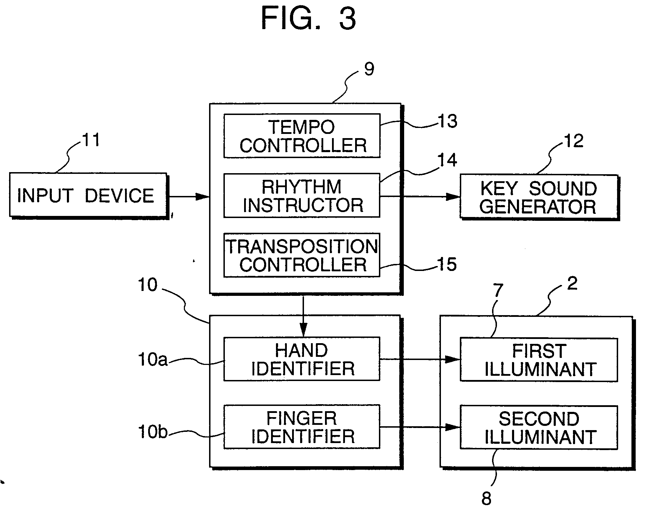

Figure 2 is a diagram showing an example of the push key indicator 2. Figure 3 is a block diagram showing an embodiment of the present invention. In Figure 2, the push key indicator 2 includes a first illuminant 7 with a round shape for displaying a mark of circle, and a second illuminant 8 for displaying a number. These illuminants are controlled by a controller 9 such as a computer. The controller 9 reads data of the music stored in an unillustrated storing medium, and outputs the read data to the push key indicators 2 through an identifier 10.

The identifier 10 includes a hand identifier 10a and a finger identifier 10b. The hand identifier 10a sends to the first illuminant 7 a signal for instructing which hand to use for pushing the key. For example, by turning on one of the first illuminants 7, 7 of the push key indicator corresponding to the key to be pushed, the player recognizes which hand to use. When the first illuminant 7 on left side has a different color from that on right side, the player can more clearly recognize which hand to use.

On the other hand, when the finger identifier 10b sends to the second illuminant 8 a signal for instructing which finger to use, the second illuminant 8 of the push key indicator corresponding to the key to be pushed displays a number showing which finger to use. In general, the number 1 is assigned to a thumb, 2 to an index finger, 3 to a middle finger, 4 to a ring finger, and 5 to a little finger. Due to the presence of the first illuminants 7, the player can recognize whether the number displayed on the second illuminant 8 is for a left hand finger or a right hand finger. Therefore, the player can recognize, from the number displayed on the second illuminant 8, the key to be pushed and the finger to be used. The time length to hold the key depressed is indicated by the time length of turning on the first or second illuminants. Therefore, the push key indicator 2 provides the player with three kinds of information, that is, the key to be pushed, the hand and finger to be used for pushing the key, and the time length to hold the key depressed. As the display is composed of only numbers and colors, large space can be used for number display (i.e., to the second illuminant) within the push key indicator of a limited area. This structure is advantageous in making the display easy to see and easy to understand for the player.

The controller 9 of the push key indicating device preferably has a tempo controller 13 for changing the tempo of the illumination display or of the key sound generation when the player inputs a signal by means of the input device 11 when necessary. The input device 11 may be, for example, a knob or a switch attached to the push key indicating device, or a foot pedal as a separate unit from the device. When the input device 11 is a foot pedal, it is possible to send a signal to the tempo controller 13 even if the player is playing a music using both hands.

The push key indicating device may include a rhythm instructor 14 for instructing the player of the rhythm of the music by turning on and off the illuminants or by generating key sound while the push key indicators indicate the keys to be pushed. Alternatively, the push key indicating device may be constructed so that only the rhythm of the music is instructed prior to indicating the key to be pushed. Furthermore, the push key indicating device may include a transposition controller 15 for controlling the push key indicators to automatically indicate the keys to be pushed in accordance with a transposition of an original tone to another tone upon receiving a signal from the input device 11. The transposition controller 15 is useful when the player sings a song and plays a keyboard instrument as an accompaniment to the song in a key meeting his or her voice tone.

The push key indicating device may include a key sound generator 12. That is, the push key indicating device is constructed such that the controller 9 outputs an action command signal to the key sound generator 12, and a key sound generating portion such as a speaker is integrated into the indication plate or is separately provided to the indication plate. With this arrangement, the sound of the key to be pushed is generated. This structure is much helpful in learning to play a music, because the player will know the music beforehand even if the player does not know the music or cannot read music scores. In accordance with the progress of the skill, the player can control the tempo of key sound generation by a tempo controller 13.

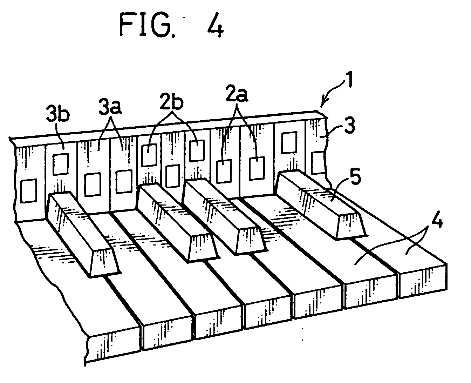

Figure 4 is a perspective diagram showing the state where the push key indicating device of Figure 1 is mounted on a keyboard instrument. In Figure 4, the push key indicating device 1 is mounted onto the keys of the keyboard instrument in such a way that the push key indicator 2a corresponds to a white key and the push key indicator 2b corresponds to a black key 5. As a keyboard instrument has a unique arrangement of black keys and white keys, the player can mount the push key indicating device to a keyboard instrument at a correct position without placing it at a wrong position. Furthermore, at this position, the push key indicators and the keys are close to each other, and therefore, the player can see both of them simultaneously. As a result, the player can recognize the indications on the push key indicators very easily. Instead of the above-described structure, the push key indicating device may be constructed such that the indication plate is formed with a straight bottom end without forming a cutout portion. In this case, the push key indicating device is intended to be placed at a space between the base end of the keys and the base end of the cover of the keyboard instrument. The push key indicating device with this structure can be produced with simple steps.

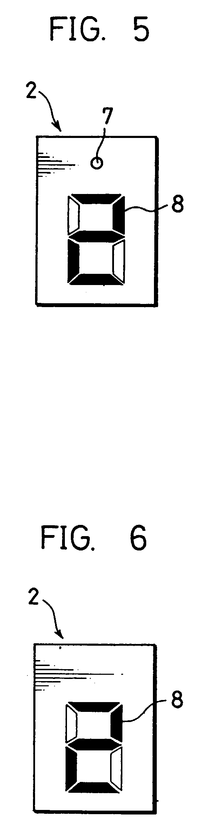

Figures 5 and 6 are diagrams showing other examples of the push key indicator, respectively. In Figure 5, the push key indicator 2 includes a first illuminant 7 with a round shape, and a second illuminant 8 for displaying a number. In this example, the first illuminant 7 is turned on and off to show which hand to use. The second illuminant 8 displays a number for indicating which finger to use. The time length to hold the key depressed is indicated by the time length of turning on the first illuminant 7 or the second illuminant 8, as of the structure shown in Figure 2.

In Figure 6, the push key indicator 2 includes only an illuminant 8 which displays a number. The illuminant 8 is capable of changing the color of the number displayed thereon. The player recognizes from the number which finger to use, and recognizes from the color of the number which hand to use. By assigning predetermined number and color to each finger and hand respectively, the player can recognize the hand and the finger to be used from the illuminant 8 alone. For example, the number 3 in red color means the middle finger of the left hand, and the number 3 in blue color means the middle finger of the right hand. The time length to hold the key depressed is indicated by the time length of turning on the illuminant.

The push key indicating device of the present invention is not limited to the structured described above. The illuminant may display the hand and the finger to be used with words or letters, for example, "left hand/middle finger". Alternatively, the illuminant may display the shape of left and right hands in which the finger to be used is colored and illuminated. Furthermore, the push key indicating device may be provided with another push key indicator for indicating the timing of pushing the damper pedal of the piano at a portion easy to see (for example, a center area of the device).

It is recommended that the illuminant is a light-emitting diode, a liquid crystal display, or a plasma display. When the push key indicator includes an illuminant which displays a number and at least one or more other illuminants which indicates the hand to be used, the information necessary for fingering can be provided to the player in a clear and understandable manner.

### EFFECT OF THE INVENTION AND INDUSTRIAL APPLICABILITY

According to the present invention, the push key indicating device provides the player with the information about the key to be pushed, the finger to be used, and the time length to hold the key depressed by simply being mounted on the a conventional keyboard instrument at the base ends of its keys. The push key indicating device enables a player to easily learn to play a keyboard instrument, even if he or she cannot read scores. In addition, a keyboard instrument such as piano, which is left unused at home, can be effectively utilized with the use of the device. Especially, by forming the indication plate of the push key indicating device with a cutout portion on its bottom side to be fitted around a black key, the device can be mounted at a correct position on the keyboard instrument, and can be easily mounted to and dismounted therefrom. Furthermore, at this mounting position, the push key indicating device is close to the keys of the keyboard instrument. As a result, the player can see both the keys and the indications displayed on the push key indicators simultaneously with ease.

## Claims

1. A push key indicating device for keyboard instrument, comprising:
a plurality of push key indicators having an illuminant for indicating a key to be pushed;
an indication plate on which the plurality of push key indicators are arranged to correspond to keys of keyboard instrument; and
a controller for illuminating the illuminants to inform a player of a key to be pushed, a finger to be used, and a hand to be used.

2. The push key indicating device according to claim 1, wherein the push key indicator includes at least one illuminant which displays a number, a letter, or a code to indicate which finger to use.

3. The push key indicating device according to claim 1, wherein the illuminant changes its display color to indicate which hand to use.

4. The push key indicating device according to claim 1, wherein the illuminant includes either one of a light-emitting diode, a liquid crystal display, or a plasma display.

5. The push key indicating device according to claim 1, wherein the push key indicator includes the illuminant which displays a number corresponding to the finger to be used, and at least one other illuminant which indicates the hand to be used.

6. The push key indicating device according to claim 1, wherein the controller is a computer.

7. The push key indicating device according to claim 1, wherein the controller includes a tempo controller which causes the illuminant to vary its tempo of illumination display upon receiving a signal from the input device.

8. The push key indicating device according to claim 1, further comprising a key sound generator for generating the sound of the key to be pushed, and the controller is so designed as to output an action command signal to the key sound generator.

9. The push key indicating device according to claim 8, wherein the key sound generator includes a tempo controller which causes the key sound generator to change its tempo of sound generation upon receiving a signal from the input device.

10. The push key indicating device according to claim 1, further comprising a rhythm instructor for instructing a player of the rhythm of the music to be played by turning on and off the illuminant and/or by generating the key sound of the key to be pushed.

11. The push key indicating device according to claim 10, wherein the rhythm instructor instructs a player of the rhythm of the music to be played prior to indicating the key to be pushed.

12. The push key indicating device according to claim 1, further comprising a transposition controller which automatically indicates the key to be pushed in accordance with a transposition of an original tone to another tone upon receiving a signal from the input device.

13. The push key indicating device according to claim 1, wherein the push key indicator corresponding to a black key are disposed at a position higher than the push key indicator corresponding to a white key.

14. The push key indicating device according to claim 1, wherein the push key indicator corresponding to a black key has a frames painted in a different color from the push key indicator corresponding to a white key.

15. The push key indicating device according to claim 1, wherein the indication plate has a cutout portion on its bottom side to fit around a black key at its base end in a depth direction.

16. A method for using a push key indicating device including: a plurality of push key indicators having an illuminant for indicating a key to be pushed; an indication plate on which the plurality of push key indicators are arranged to correspond to keys of keyboard instrument; and a controller for illuminating the illuminants to inform a player of the key to be pushed, a finger to be used, and a hand to be used, the method comprising the step of setting the device to keys of conventional keyboard instrument at their base ends in a depth direction.

17. The method according to claim 16, wherein the indication plate is mounted on keys of a conventional key instrument in such a way a cutout portion formed on the bottom side of the indication plate is fit around a base portion of a black key of the conventional key instrument are fit to black keys.
